# EUROPÄISCHE PATENTSCHRIFT

(11) **EP 1 103 791 B1**
(45) Veröffentlichungstag und Bekanntmachung des Hinweises auf die Patenterteilung: **12.12.2007**
(21) Anmeldenummer: 00811009.0
(22) Anmeldetag: 30.10.2000
(51) Int. Cl.: G01D 5/347

(54) **Optisches Winkel- und/oder Weg-Messmodul**
Optical angular or longitudinal position measuring device
Dispositif optique de mesure de positions angulaires ou longitudinales

(30) Priorität: 18.11.1999 CH 210699
(43) Veröffentlichungstag der Anmeldung: 30.05.2001
(73) Patentinhaber: Baumer Holding AG, 8500 Frauenfeld (CH)
(72) Erfinder:
(74) Vertreter: Frei, Alexandra Sarah

(56) Entgegenhaltungen:
- EP-A- 0 942 285
- FR-A- 2 653 552
- US-A- 5 860 967

## Beschreibung

Die Erfindung betrifft ein optisches Winkel- und/oder Weg-Messmodul sowie einen optischen Messgeber gemäss Oberbegriffen der unabhängigen Patentansprüche.

Für immer mehr Anwendungen ist es zweckmässig, Winkel- und Weg-Messsysteme in vorhandene Geräte einzubauen. Bisher erfolgte dies überwiegend mit sogenannten geschlossenen Gebersystemen, die eine Massverkörperung und einen Messkopf funktionsfähig beinhalten. Sie haben dadurch ihre Eigenlagerung integriert und sind mittels Kupplungen an das Messobjekt entsprechend zu befestigen. Abgesehen von dem voluminösen und durch Eigenlagerung teuren Aufbau, ist die Befestigung z. B. an Wellenenden bei Drehwinkelgebern oft störend beim Einbau und aufwendig in der Fertigung und Montage.

Die bisherigen Ansätze, sogenannte Einbaugeber (ohne Eigenlagerung), sind nur bei geringen Winkel-Auflösungen sowie reinen Umgebungsbedingungen zur Anwendung gekommen und haben sich nicht durchgesetzt. Obwohl die Lager eingespart werden, sind die nicht ausreichende Präzisionsmontage, die aufwendige Justierung, die geforderten schmutzfreien Räume, die problematische Beleuchtung und Abbildungsverhältnisse hinderlich und haben keinen Einsatz erlaubt. Die bei Einbaugebern an sich gewünschte Auflichtbeleuchtung benötigt aufwendige, teure sowie empfindliche Oberflächenstrukturen (difraktive optische Strukturen) der Massverkörperungen, um eine ausreichende Abbildung zu erhalten, weil durch die notwendige schräg einfallende Beleuchtung keine spiegelnd reflektierenden Substratoberflächen erlaubt sind. Diese speziellen optischen Oberflächen sind aufwendig und nur mit teueren Werkzeugen realisierbar und sehr empfindlich.

Ein Messmodul mit den Merkmalen des Oberbegriffs von Anspruch 1 ist aus FR-A 2 653 552 bekannt. Hier wird die Position einer Massverkörperung relativ zum Messmodul spektral kodiert und wellenlängenselektiv ausgewertet, indem die Massverkörperung grossflächig mit einem Spektrum von Wellenlängen beleuchtet und je nach Position nur eine Wellenlänge reflektiert wird.

Es ist Aufgabe der Erfindung, ein optisches Modul für einen hochauflösende Winkel- und/oder Weg-Messgeber sowie einen solchen Messgeber zu schaffen, welcher die obigen Nachteile nicht aufweist. Das Modul soll integriert einbaubar sein. Die Aufgabe wird gelöst durch das Winkel- und/oder Weg-Messmodul und den Messgeber, wie sie in den unabhängigen Patentansprüchen definiert sind.

Das erfindungsgemässe optische Winkel- und/oder Weg-Messmodul zur Messung seiner Lage gegenüber einer Massverkörperung, beinhaltet Mittel zur Lichtdetektion und Mittel zur Abbildung eines Teils der Massverkörperung auf die Detektionsmittel. Es beinhaltet ferner Mittel, mittels welcher einerseits einfallendes Licht auf die Massverkörperung und andererseits von der Massverkörperung kommendes Licht zu den Detektionsmitteln führbar ist.

Der erfindungsgemässe optische Messgeber umfasset einen Abtastkopf und eine relativ zum Abtastkopf bewegbare Massverkörperung, wobei der Abtastkopf (1) ein erfindungsgemässes optisches Winkel- und/oder Weg-Messmodul beinhaltet.

Durch die im Hauptanspruch gekennzeichneten Massnahmen sind die Muster auf praktisch allen Substratoberflächen durch die nahezu "spiegelnd" bzw. diffus reflektierenden planen Strukturen erfassbar, die einfach mit bekannten lithographischen Ätzprozessen, Druck- und/oder Laserbeschrifter-Verfahren aufbringbar sind. Somit sind auch auf einfache Weise auf z. B. Strahl beschriftete Strukturen auf Wellen, Trommeln möglich und besonders preisgünstige Winkel- und/oder Weg-Messsysteme realisierbar.

Die weiterführende Ausgestaltung der Erfindung erlaubt insbesondere den hochauflösenden Einbau von Präzisionsgebern, in dem mechanische Toleranzen beim Einbau und Betrieb abgefangen werden. Ein leicht gleitendes und flexibles Zwischenteil trägt nicht nur zur einfachen Montage bzw. Unterhalt des Einbaugebers bei; vielmehr sind nicht unerhebliche mechanische Auslenkungen der Massverkörperung (z. B. Motor-Wellenenden oder Lineale) automatisch kompensiert. Das Zwischenteil ist weiterhin erfindungsgemäss so ausgeführt, dass eine kostengünstig erstellte Kunststoff-Optik von Dämpfen, Schmutz etc. an einer empfindlichen Linsenfläche weitestgehend geschützt ist.

Mit der erfinderischen Ausgestaltung wird die kostengünstige Erstellung des Messkopfes und der Massverkörperung sowie der hochauflösenden Messsysteme ermöglicht, da die Auflichtbeleuchtung die einfache Beschriftung erlaubt und die Montage- und Einbautoleranzen sowie schmutzige Umgebungseinflüsse beherrscht werden.

Das erfindungsgemässe Messmodul ist sowohl in "offenen" Messgebern einsetzbar, wobei das Messmodul vorzugsweise gleitend auf der Massverkörperung bewegt, als auch in "geschlossenen" Messgebern, wobei es vorzugsweise derart im Messgeber eingebaut ist, dass es einen definierten Abstand zur ebenfalls eingebauten Massverkörperung einhält.

Im folgenden wird die Erfindung anhand von Zeichnungen detailliert erläutert. Dabei zeigen schematisch:
- Fig. 1: einen erfindungsgemässen Winkelmessgeber in einer Seitenansicht,
- Fig. 2: einen erfindungsgemässen Wegmessgeber in einer perspektivischen Ansicht und
- Fig. 3: den Strahlengang in einer Ausführungsform des erfindungsgemässen Messgebers im Querschnitt.

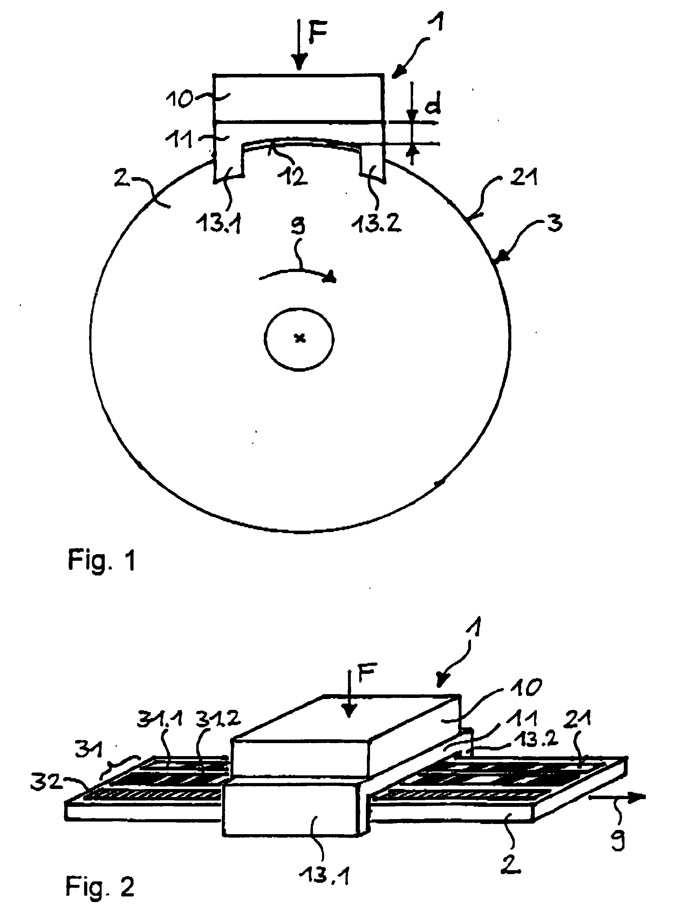

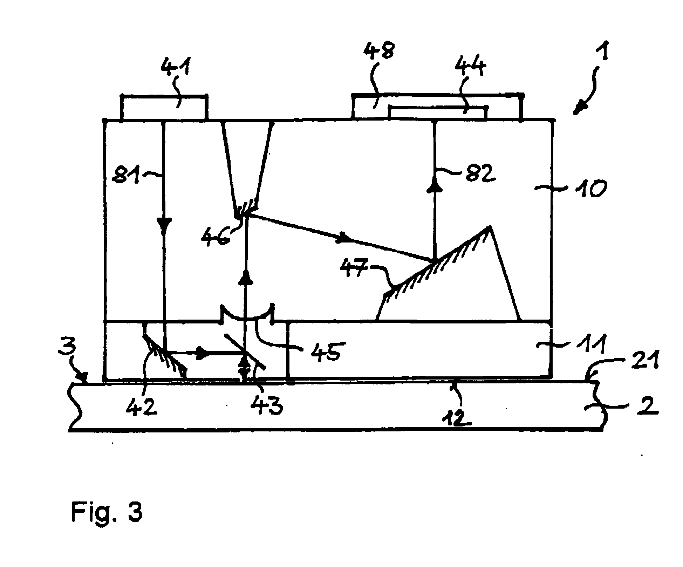

**Figur 1** zeigt einen erfindungsgemässen Winkelmessgeber in einer Seitenansicht. Er hat die Aufgabe, die Winkellage eines Messmoduls 1 gegenüber einem drehbaren Teil 2, bspw. einer Motorenwelle, zu messen. Die Relativbewegung, in diesem Ausführungsbeispiel eines Winkelmessgebers die relative Drehung, des Messmoduls 1 gegenüber dem Teil 2 ist durch einen Pfeil 9 angedeutet. Auf der dem Messmodul 1 zugewandten Fläche 21 des drehbaren Teils 2, in diesem Beispiel auf der Mantelfläche der zylinderförmigen Welle, ist eine (in Fig. 1 nicht sichtbare) Massverkörperung 3, bspw. in der Form eines linearen Codes, angebracht. Das Messmodul 1 beinhaltet Mittel zur Beleuchtung der Massverkörperung 3, zur Detektion des von der Massverkörperung 3 kommenden Lichtes und zur Abbildung der Massverkörperung 3 auf die Detektionsmittel; diese Mittel werden anlässlich der Fig. 3 erläutert.

Das Messmodul 1 beinhaltet vorzugsweise einen Trägerkörper 10 und Mittel 11 zur Einhaltung eines (willkürlich) definierten Abstands d bezüglich der Massverkörperung 3 senkrecht zur Flächenausdehnung der Massverkörperung 3 und/oder zur Ermöglichung einer Relativbewegung gegenüber der Massverkörperung 3. Zu diesem Zweck kann das Messmodul 1 ein Modulelement 11 umfassen, dessen der Massverkörperung 3 zugewandte Oberfläche 12 an die Massverkörperung 3 geometrisch, bspw. was ihren Krümmungsradius betrifft, angepasst ist und dank ihrer Materialeigenschaften mit sehr geringer Reibung auf der Massverkörperung 3 gleitet. Um den gewünschten definierten Abstand d gegenüber der Massverkörperung 3 ständig einzuhalten, ist es vorteilhaft, (nicht eingezeichnete) Mittel zum Anpressen des Messmoduls 1 auf die Massverkörperung 3 mit einer geeigneten Anpresskraft F vorzusehen. Solche Anpressmittel können bspw. als leicht vorgespannte Druckfeder ausgebildet sein.

Es können zusätzlich Mittel 13.1, 13.2 zur Einhaltung einer definierten Lage bezüglich der Massverkörperung 3 in der Flächenausdehnung der Massverkörperung 3 vorgesehen sein. Das Zwischenteil 11 bzw. ein Gebergehäuse können bspw. seitlich geführt am beweglichen Teil 2 gleitend anliegen und so eine reine Drehbewegung des Messmoduls 1 gegenüber dem Teil 2 gewährleisten. So können eventuelle störende Abweichungen bzw. Messfehler vermieden werden.

In **Figur 2** ist ein Wegmessgeber in einer perspektivischen Ansicht dargestellt. Er hat die Aufgabe, die Lage eines Messmoduls 1 gegenüber einem linear verschiebbaren Teil 2, bspw. einem Massstab, zu messen. Abgesehen davon, dass die Ausführungsform von Fig. 1 einen Winkelmessgeber zeigt, gelten die anlässlich von Fig. 1 gemachten Erläuterungen analog auch für den Wegmessgeber von Fig. 2.

Auf der dem Messmodul 1 zugewandten Fläche 21 des Massstabs 1 ist in Fig. 2 die Massverkörperung 3 schematisch eingezeichnet. Sie umfasst bspw. eine Absolutspur 31 mit einem linearen Code, welcher durch reflektierende Flächen ("1") und absorbierende Flächen ("0") dargestellt wird, und eine Inkrementalspur 32 zur Feinauflösung zwischen zwei Werten der Absolutspur 31. Die Absolutspur 31 kann zwecks der bekannten, für eine Signalverarbeitung vorteilhaften Differenzbildung zwei Teilspuren 31.1, 31.2 umfassen, welche denselben Code tragen, aber zueinander invers sind (d. h. einer "0" auf der ersten Teilspur 31.1 entspricht eine "1" auf der zweiten Teilspur 31.2 und umgekehrt). Für Details zur Detektion und Auswertung der Absolut- und Inkrementalspur sei auf die Schrift DE-195 05 176.9 hingewiesen, welche durch Bezugnahme in diese Schrift aufgenommen wird.

Auch hier können zusätzlich Mittel 13.1, 13.2 zur Einhaltung einer definierten Lage bezüglich der Massverkörperung 3 in der Flächenausdehnung der Massverkörperung 3 vorgesehen sein, um eine rein lineare Relativbewegung des Messmoduls 1 gegenüber dem Teil 2 zu gewährleisten.

**Figur 3** zeigt den Strahlengang in einer Ausführungsform des erfindungsgemässen Messgebers im Querschnitt. Der Messgeber umfasst ein Messmodul 1 und eine, bspw. auf einem Teil 2, relativ dazu bewegliche Massverkörperung 3. Das Messmodul 1 basiert im wesentlichen auf einem Trägerkörper 10 aus Kunststoff oder entsprechend ausgeführtem Metall, das zweckmässigerweise beschichtet ist. Es kann aus zwei Teilmodulen 10, 11 oder auch einstückig gefertigt sein. Seine der Massverkörperung 3 zugewandte Fläche 12 ist derart ausgebildet, dass das Messmodul 1 einen definierten Abstand zur Massverkörperung 3 einhält und mit sehr geringer Reibung praktisch verschleissfrei über die Massverkörperung 3 gleitet.

Dass Messmodul 1 kann eine Lichtquelle 41 enthalten, bspw. eine Leuchtdiode (LED) oder eine Laserdiode. Alternativ kann Licht auch ausserhalb des Messmoduls 1 erzeugt werden und auf einem geeignetem Strahlengang in das Messmodul 1 einfallen bzw. eingekoppelt werden. (Unter "Licht" wird in dieser Schrift jegliche Art von elektromagnetischer Strahlung verstanden, also bspw. sichtbares Licht, aber auch infrarote oder ultraviolette Strahlung.) Einfallendes Licht 81 gelangt über ein erstes reflektierendes Element 42 auf einen Strahlteiler oder teildurchlässigen Spiegel 43, von dem es teilweise auf die Massverkörperung 3 reflektiert wird. Von der Massverkörperung 3 reflektiertes und/oder gestreutes Licht 82 wird vom Strahlteiler 16 teilweise transmittiert und gelangt auf Lichtdetektionsmittel 44. Der beleuchtete Teil der Massverkörperung 3 wird durch eine Linse 45 auf die Lichtdetektionsmittel abgebildet. Die Abbildung ist vorzugsweise telezentrisch, wobei ein zweiter Reflektor 46 mit kleiner Fläche als Aperturblende dienen kann, welche als Austrittspupille wirkt. Durch Verwendung eines solchen Telezentriespiegels bzw. einer Blende 46 im Brennpunkt der Linse 45 kann erreicht werden, dass das um den Abbildungsmassstab vergrösserte Bild der Massverkörperung 3 in der Bildebene auf den Lichtdetektionsmitteln 44 in seinen Dimensionen gleich bleibt. auch wenn die Gegenstandsweite in kleinen Bereichen (z. B. wegen eines Höhenschlags der Massverkörperung 3) variiert. Der Strahlengang kann bei Bedarf durch weitere optische Elemente wie ein drittes reflektierendes Element 47 beeinflusst werden.

Die reflektierenden Elemente 42, 46, 47 können bspw. als Grenzflächen zwischen Kunststoff 10 und Luft ausgebildet sein. Diese Grenzflächen sind vorzugsweise mit mindestens einer reflektierenden Metallschicht und/oder mit einem reflektierenden System von dielektrischen Schichten versehen.

Mit Hilfe von polarisationsoptischen Elementen, darunter einem polarisationsabhängigen Strahlteiler 43, könnte erreicht werden, dass das einfallende Licht 81 im wesentlichen zu 100 % reflektiert und das zum Detektor 44 laufende Licht 82 im wesentlichen zu 100 % transmittiert wird. So ergäbe sich eine hohe Lichtausbeute, ein höheres Signal-Rausch-Verhältnis und letztlich eine höhere Empfindlichkeit.

Die Lichtdetektionsmittel 44 können bspw. Photodioden mit einer speziellen geometrischen Formgebung sein, wie sie in DE-195 05 176.9 beschrieben sind. Sie sind vorzugsweise in einem speziellen anwendungsspezifischen integrierten Schaltkreis (Application Specific Integrated Circuit, ASIC) 48 integriert, der auch spezielle Hardware zur Signalverarbeitung und Feinwert-Interpolation enthält (siehe DE-195 05 176.9). Dieser ASIC 48 kann in einer anderen Ausführungsform auch die Lichtquelle 41 und ihre Ansteuerung beinhalten.

Das Messmodul 1 kann auf einer (nicht dargestellten) Leiterplatte aufgehängt werden, welche gleichzeitig als mechanische Befestigung für das Modul 1 und als elektrische Verbindung für Energie und/oder Signale zum und/oder vom Modul 1 dienen kann.

Bei Kenntnis der Erfindung kann der Fachmann weitere Ausführungsformen entwerfen, welche jedoch auch zum Erfindungsgegenstand gehören. Beispielsweise könnte das von der Lichtquelle 41 einfallende Licht 81 auch vom Strahlteiler 43 transmittiert und das von der Massverkörperung 3 reflektierte Licht 82 vom Strahlteiler 43 reflektiert werden. Auch sind andere mechanische Aufbauten denkbar. So könnte selbstverständlich bei einem Drehgeber die Massverkörperung auf einer Grundfläche des rotierenden Teils 2 angebracht sein statt auf der Mantelfläche 21 wie im Ausführungsbeispiel von Fig. 1.

## Patentansprüche

1. Optisches Winkel- und/oder Weg-Messmodul (1) zur Messung seiner Lage gegenüber einer Massverkörperung (3), beinhaltend Mittel (44) zur Lichtdetektion und Mittel, mittels welchen einerseits einfallendes Licht (81) auf die Massverkörperung (3) und andererseits von der Massverkörperung (3) kommendes Licht (82) zu den Detektionsmitteln (44) führbar ist, **dadurch gekennzeichnet, dass die** Mittel, mittels welchen einfallendes Licht (81) auf die Massverkörperung (3) führbar ist, einen Strahlteiler oder einen teildurchlässigen Spiegel (43) umfassen, von dem das einfallende Licht (81) teilweise auf die Massverkörperung (3) reflektiert wird, und dass Mittel (45-47) zur Abbildung eines Teils der Massverkörperung (3) auf die Detektionsmittel (44) vorgesehen sind, die unter Erzeugung eines Bildes der Massverkörperung (3) den beleuchteten Teil der Massverkörperung (3) auf die Lichtdetektionsmittel (44) abbilden.

2. Modul (1) nach Anspruch 1, zusätzlich beinhaltend eine Lichtquelle (41) zur Erzeugung des einfallenden Lichtes (81).

3. Modul (1) nach Anspruch 2, wobei die Lichtquelle (41) als Leuchtdiode oder als Laserdiode ausgebildet ist.

4. Modul (1) nach einem der Ansprüche 1-3, zusätzlich beinhaltend Mittel (11) zur Einhaltung eines definierten Abstands (d) zur Massverkörperung (3) in Richtung senkrecht zur Flächenausdehnung der Massverkörperung (3) und/oder zur Ermöglichung einer Relativbewegung gegenüber der Massverkörperung (3).

5. Modul (1) nach Anspruch 4, wobei die Mittel (11) zur Ermöglichung einer Relativbewegung als Gleitfläche (12) ausgebildet sind.

6. Modul (1) nach Anspruch 4 oder 5, umfassend zwei Modulelemente (10, 11), von denen ein erstes Modulelement (10) die Detektionsmittel (44) und ein zweites Modulelement (11) die Mittel zur Ermöglichung einer Relativbewegung beinhaltet.

7. Modul (1) nach einem der Ansprüche 1-6, zusätzlich beinhaltend Mittel (13.1, 13.2) zur Einhaltung einer definierten Lage bezüglich der Massverkörperung (3) in Richtung der Flächenausdehnung der Massverkörperung (3).

8. Modul (1) nach einem der Ansprüche 1-7, wobei die Detektionsmittel (44) lichtempfindliche Flächen für die Erfassung sowohl eines Absolutwerts als auch eines Inkrementalwerts der relativen Lage des Moduls (1) gegenüber der Massverkörperung (3) aufweisen.

9. Modul (1) nach einem der Ansprüche 1-8, beinhaltend elektronische Mittel (48) zur Verarbeitung der Ausgangssignale der Detektionsmittel (44) zu einem Gesamtabsolutwert der relativen Lage des Moduls (1) gegenüber der Massverkörperung (3).

10. Modul (1) nach einem der Ansprüche 1-9, wobei die Abbildungsmittel (45-47) derart ausgebildet sind, dass sie den Teil der Massverkörperung (3) telezentrisch auf die Detektionsmittel (44) abbilden.

11. Modul (1) nach Anspruch 10, wobei die Abbildungsmittel (45-47) eine Abbildungslinse (45) und eine als Austrittspupille wirkende Aperturblende (46) umfassen.

12. Modul (1) nach einem der Ansprüche 1-11, umfassend einen Trägerkörper (10) aus Kunststoff, in welchen die Abbildungsmittel (45-47) integriert sind.

13. Optischer Messgeber, umfassend einen Abtastkopf und eine relativ zum Abtastkopf bewegbare Massverkörperung (3), **dadurch gekennzeichnet, dass** der Abtastkopf (1) ein optisches Winkel- und/oder Weg-Messmodul (1) nach einem der Ansprüche 1-12 beinhaltet.

## Claims

1. Optical angle and/or distance measurement module (1) for measuring its position with respect to an embodiment of a scale (3), containing means (44) for light detection and means, by means of which, firstly, incident light (81) is leadable onto the embodiment of the scale (3) and, secondly, light coming from the embodiment of the scale (3) is leadable to the detection means (44), **characterized in that** the means, by means of which incident light (81) is leadable onto the embodiment of the scale (3), comprise a beam splitter or a semi-transparent mirror (43), from which the incident light is at least partly reflected onto the embodiment of the scale (3) and that means (45-47) for imaging a part of the embodiment of the scale (3) onto the detection means (44) are provided, which, under generation of an image of the embodiment of the scale (3), reproduce the illuminated part of the embodiment of the scale (3) onto the light detection means (44).

2. Module (1) according to claim 1, additionally containing a light source (41) for producing the incident light (81).

3. Module (1) according to claim 2, the light source (41) being designed as a light-emitting diode or as a laser diode.

4. Module (1) according to one of claims 1 - 3, additionally containing means (11) for maintaining a defined distance (d) from the embodiment of the scale (3) in the direction perpendicular to the areal extent of the embodiment of the scale (3), and/or for permitting a relative movement with respect to the embodiment of the scale (3).

5. Module (1) according to claim 4, the means (11) for permitting a relative movement being designed as a sliding surface (12).

6. Module (1) according to claim 4 or 5, comprising two module elements (10, 11), of which a first module element (10) contains the detection means (44) and a second module element (11) contains the means for permitting a relative movement.

7. Module (1) according to one of claims 1 - 6, additionally containing means (13.1, 13.2) for maintaining a defined position with respect to the embodiment of the scale (3) in the direction of the areal extent of the embodiment of the scale (3).

8. Module (1) according to one of claims 1 - 7, the detection means (44) having light-sensitive areas for detecting both an absolute value and an incremental value of the relative position of the module (1) with respect to the embodiment of the scale (3).

9. Module (1) according to one of claims 1 - 8, containing electronic means (48) for processing the output signals from the detection means (44) to form a total absolute value of the relative position of the module (1) with respect to the embodiment of the scale (3).

10. Module (1) according to one of claims 1 - 9, the imaging means (45 - 47) being designed in such a way that they image part of the embodiment of the scale (3) telecentrically onto the detection means (44).

11. Module (1) according to claim 10, the imaging means (45 - 47) comprising an imaging lens (45) and an aperture stop (46) acting as an exit pupil.

12. Module (1) according to one of claims 1-11, comprising a supporting body (10) made of plastic, in which the imaging means (45 - 47) are integrated.

13. Optical measurement transmitter, comprising a sensing head and an embodiment of a scale (3), which are movable in relation to the sensing head,
**characterized in that** the sensing head (1) contains an optical angle and/or distance measurement module (1) according to one of claims 1-12.

## Revendications

1. Module optique (1) de mesure d'angle et/ou de déplacement, pour la mesure de sa position par rapport à une représentation de mesure (3), lequel module contient des moyens (44) de détection de lumière et des moyens par lesquels d'une part la lumière (81) qui vient frapper la représentation de mesure (3) et d'autre part la lumière (82) qui provient de la représentation de mesure (3) peuvent être amenées aux moyens de détection (44), **caractérisée en ce que** les moyens par lesquels la lumière (81) qui vient frapper la représentation de mesure (3) peut être amenée comprennent un diviseur de faisceau ou un miroir semi-transparent (43) par lequel la lumière incidente (81) est réfléchie en partie sur la représentation de mesure (3) et **en ce qu'**ils présentent des moyens (45-47) de formation d'une image d'une partie de la représentation de mesure (3) sur les moyens de détection (44) qui forment une image du représentation de mesure (3) en formant l'image de la partie éclairée de la représentation de mesure (3) sur les moyens (44) de détection de lumière.

2. Module (1) selon la revendication 1, qui contient en outre une source de lumière (41) qui crée la lumière incidente (81).

3. Module (1) selon la revendication 2, dans lequel la source de lumière (41) est configurée comme diode luminescente ou diode laser.

4. Module (1) selon l'une des revendications 1 à 3, qui contient de plus des moyens (11) qui maintiennent une distance définie (d) par rapport à la représentation de mesure (3) dans la direction perpendiculaire à l'extension de la surface du représentation de mesure (3) et/ou qui permettent un déplacement relatif par rapport à la représentation de mesure (3).

5. Module (1) selon la revendication 4, dans lequel les moyens (11) qui permettent un déplacement relatif sont configurés comme surface de glissement (12).

6. Module (1) selon les revendications 4 ou 5, qui comprend deux éléments de module (10, 11) parmi lesquels un premier élément de module (10) contient les moyens de détection (44) et un deuxième élément de module (11) les moyens qui permettent le déplacement relatif.

7. Module (1) selon l'une des revendications 1 à 6, qui contient en outre des moyens (13.1, 13.2) de maintien d'une position définie par rapport à la représentation de mesure (3) dans la direction de l'extension de la surface de la représentation de mesure (3).

8. Module (1) selon l'une des revendications 1 à 7, dans lequel les moyens de détection (44) présentent des surfaces sensibles à la lumière qui détectent aussi bien la valeur absolue que la valeur d'incrément de la position relative du module (1) par rapport à la représentation de mesure (3).

9. Module (1) selon l'une des revendications 1 à 8, qui contient des moyens électroniques (48) qui traitent les signaux de sortie des moyens de détection (44) pour fournir une valeur absolue totale de la position relative du module (1) par rapport à la représentation de mesure (3).

10. Module (1) selon l'une des revendications 1 à 9, dans lequel les moyens (45-47) de formation d'image sont configurés de manière à former de manière télécentrée l'image de la partie de la représentation de mesure (3) sur les moyens de détection (44).

11. Module (1) selon la revendication 10, dans lequel les moyens (45-47) de formation d'image comprennent une lentille (45) de formation d'image et un diaphragme (46) qui joue le rôle d'une pupille de sortie.

12. Module (1) selon l'une des revendications 1 à 11, qui comprend un corps de support (10) en matière synthétique dans lequel les moyens (45-47) de formation d'image sont intégrés.

13. Emetteur optique de mesure qui comprend une tête de palpage et une représentation de mesure (3) qui peut être déplacé par rapport à la tête de palpage, **caractérisé en ce que** la tête de palpage (1) contient un module optique (1) de mesure d'angle et/ou de distance selon l'une des revendications 1 à 12.
